# EUROPÄISCHE PATENTANMELDUNG

(11) **EP 2 246 633 A2**
(43) Veröffentlichungstag der Anmeldung: **03.11.2010**
(21) Anmeldenummer: 10004341.3
(22) Anmeldetag: 23.04.2010
(51) Int. Cl.: F24D 19/10

(54) **Solarthermische Anlage mit Wärmepumpe und Verfahren zum Betrieb einer solchen Anlage**

(30) Priorität: 30.04.2009 DE 102009019244
(71) Anmelder: Vaillant GmbH, 42859 Remscheid (DE)
(72) Erfinder: Gößlinghoff, Claus-Heinrich, 42859 Remscheid (DE)
(74) Vertreter: Hocker, Thomas

(57) **Zusammenfassung**

Bei einem Verfahren zur Nutzung von solarer Wärme mit mindestes einem Solarkollektor (1), mindestens einem Warmwasserspeicher (6, 7), mindestens einer Wärmepumpe (8) und mindestens einer Wärmesonde (3), welche mit der mindestens einen Wärmepumpe (8) verbunden ist, sowie mindestens einem Heizungskreislauf (9), bei solarem Ertrag wird mittels des Solarkollektors (1) bedarfsgerecht Wärme auf den mindestens einem Warmwasserspeicher (6, 7), den mindestens einem Heizungskreislauf (9) und / oder in die mindestens eine Wärmesonde (3) geleitet.

## Beschreibung

Mittels solarthermischer Anlagen können Brauchwasser und Räume erwärmt werden. Besteht kein entsprechender Wärmebedarf, so wird gemäß dem Stand der Technik die solartechnische Anlage außer Betrieb genommen. Aus DE 10 2006 009 112 sind Maßnahmen zum Betreiben einer Solarkollektoranlage ohne Wärmeabfuhr bekannt.

Der solare Ertrag und die Wärmeanforderung sind oft gegenläufig. Daher können solarthermische Anlagen mit konventionellen, fossil betriebenen Heizungsanlagen oder Wärmepumpen kombiniert werden. Bei der Kombination einer solarthermischen Anlage mit einer Wärmepumpe entzieht die Wärmepumpe einer Wärmequelle Wärme.

Aufgabe der Erfindung ist eine optimierte Nutzung einer solarthermischen Anlage in Kombination mit einer Wärmepumpe.

Erfindungsgemäß wird dies mittels eines Verfahrens gemäß Anspruch 1 dadurch gelöst, dass bei einer Anlage mit mindestes einem Solarkollektor, einem Warmwasserspeicher, einer Wärmepumpe und einer Wärmesonde, welche mit der Wärmepumpe verbunden ist, sowie einem Heizungskreislauf, der solarem Ertrag des Solarkollektors bedarfsgerecht auf einen Warmwasserspeicher, den Heizungskreislauf und / oder in die Wärmesonde geleitet wird. Hierbei erfolgt eine leistungsangepasste Entnahme aus der Wärmequelle anhand des Verbrauches mit Drehzahlregelung der Quellenpumpe. Durch diverse Messungen wird der Zustand der Wärmequelle erkannt. Beim Vorhandensein mehrerer Wärmesonden können diese einzeln oder zusammen ent- und beladen werden.

Hierbei ist die Verwendung des Wärmeertrags des Solarkollektors in folgender Reihenfolge sinnvoll:
1. Befriedigung des Wärmebedarfs zur Brauchwasserbereitung
2. Befriedigung des Wärmebedarfs der Heizungskreisläufe
3. Ladung der Warmwasserspeicher und
4. Regenerierung der Wärmesonden.

Hierbei können diese Wärmesenken alleine oder mindestens zwei gleichzeitig mit Wärme versorgt werden.

In dem Fall, in dem der solare Ertrag des Solarkollektors nicht zur Deckung der Wärmeanforderung ausreicht, wird Wärme aus den Warmwasserspeichern oder aus den Wärmesonden entnommen. Je höher die Speicherladung hierbei ist, desto mehr Wärme kann aus den Warmwasserspeichern zur Befriedigung des Wärmebedarfs entnommen werden. Um den Ladezustand zu ermitteln, muss mindestens ein Temperatursensor im entsprechenden Warmwasserspeicher angeordnet sein. Bei einem Schichtenspeicher sollten mehrere Temperatursensoren auf unterschiedlichem Höhenniveau angeordnet sein.

Droht Vereisung der Wärmesonden, so kann Wärme vom Solarkollektor oder einem Warmwasserspeicher an die jeweilige Wärmesonde geleitet werden.

Zur Durchführung eines derartigen Verfahrens ist eine solartechnische Anlage mit mindestes einem Solarkollektor, einem Warmwasserspeicher, einer Wärmepumpe und einer Wärmesonde, welche mit der Wärmepumpe verbunden ist, sowie einem Heizungskreislauf notwendig, bei welcher der Solarkollektor über fluidführende Leitungen mit mindestens einer Wärmesonde verbunden ist, wobei in diesen Leitungen Um- und / oder Absperrventile zum Sperren der Verbindung angeordnet sind.

Durch das Erkennen der Lastzustände auf der Verbraucherseite sowie des Erkennen der zur Verfügung stehenden Wärme in der Wärmequelle (einzelne Sonden) kann gezielt die geeignetste Sonde als Wärmequelle angesprochen werden, wobei die nicht genutzten Wärmequellen über die Solaranlage einzeln nachgeladen werden können. Die Kaskadenregelung überwacht permanent alle Daten und Lastzustände im System; wählt selbstständig die beste Wärmequelle. Ferner werden vom Regler die Motoren der Kompressoren in der Drehzahl den jeweiligen Lastzuständen angepasst. Gleiches gilt für die Sole-Umwälzpumpe sowie für die primäre Heizkreispumpe. Jede Pumpe soll lastabhängig geregelt werden. Unabhängig von einander können Sonden beladen oder entladen werden. Ferner soll mit Solar evtl. benötigter Wärmebedarf (Heizung und/oder Brauchwasser) direkt gedeckt werden können. Ein Verschneiden der solaren und geothermischen Wärmequelle ist möglich, das heißt, man hebt die Soletemperatur durch Beimischung warmer Solarsole an und erhöht somit den Wirkungsgrad der Wärmepumpe. Der Kaskadenregler soll selbstständig die solare, zur Verfügung stehenden Wärmemenge erkennen und optimal umsetzen.

Durch diese dynamische Nutzung von Wärmequellen ist sowohl eine Wirkungsgradsteigerung, als auch ein Aufladen der Wärmequellen durch Solar oder andere Wärmequellen möglich.

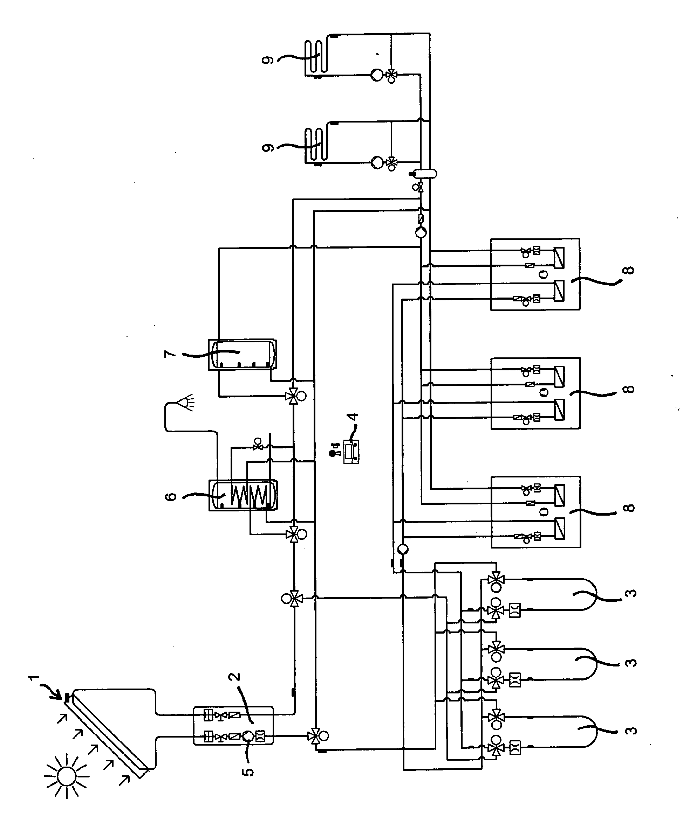

Die Erfindung wird nun anhand der Figur erläutert.

Die Figur zeigt eine Anlage mit mehreren Wärmepumpen 8, deren Verdampfer über ein gemeinsames Leitungssystem mit mehreren Wärmesonden 3 verbunden sind, wobei die Wärmesonden 3, die vorzugsweise im Erdreich angeordnet sind, als Umweltwärmequellen für die Wärmepumpen 8 dienen. Die Kondensatoren der Wärmepumpen 8 sind über ein gemeinsames Leitungssystem mit mehreren Heizungskreisläufen 9 verbunden. Ein Solarkollektor 1 mit Solarstation 2 und Pumpe 5 ist mit zwei Warmwasserspeichern 6, 7 sowie den Heizungskreisläufen 9 verbunden. Der eine Warmwasserspeicher 6 dient der Brauchwasserbereitung, der andere Warmwasserspeicher 7 der Heizungswasserspeicherung für die Heizungskreisläufe 9. Ein Regler 4 kontrolliert die Anlage, auf die Datenleitungen wurde aus Übersichtlichkeitsgründen in der Figur verzichtet.

Diverse Pumpen und Ventile erlauben vielfältige Möglichkeiten der Wärmeleitung und der Abkopplung.

Je nach Schaltung der Ventile kann Solarwärme des Solarkollektors 1 zum Heizen des Warmwasserspeichers 6, des Warmwasserspeichers 7, der Heizungskreisläufe 9, der Verdampfer der Wärmepumpen 8 oder der Wärmesonden 3 verwendet werden.

Mittels eines nicht dargestellten Photovoltaikelement kann die Intensität der Sonneneinstrahlung festgestellt werden. Alternativ ist es auch möglich, den solaren Ertrag (Wärmeeintrag) bei eingeschalteter Pumpe 5 anhand der Temperaturdifferenz zwischen der Vor- und Rücklaufleitung des Absorbers 1 zu ermitteln. Der Volumenstrom kann hierbei gemessen oder aus der Pumpendrehzahl oder Pumpenleistung abgeleitet werden.

Aus der gemessenen Außentemperatur und der gebäudespezifischen Heizkurve ergibt sich die Sollheizleistung. Diese Sollheizleistung wird mit dem solaren Ertrag verglichen. Darüber hinaus wird der Zustand der Warmwasserspeicher 6, 7 sowie der Heizkreisläufe 9 erfasst.

Die Brauchwasserbereitung wird generell vorrangig behandelt. Demzufolge wird erst dann Wärme für andere Zwecke verwendet, wenn der aktuelle Brauchwasserbedarf befriedigt ist. An zweiter Stelle steht die Deckung des Bedarfs an Wärme für die Raumheizung. Letztendlich wird Wärme für die Ladung der Warmwasserspeicher 6, 7 und die Regenerierung der Wärmesonden 3 im Erdreich verwendet, wobei in der Regel erst dann Wärme zur Regenerierung der Wärmesonden 3 im Erdreich verwendet wird, wenn die Warmwasserspeicher 6, 7 vollständig geladen sind, was mittels mindestens eines Temperatursensors in den Warmwasserspeichern 6, 7 festgestellt wird. Befinden sich in den Warmwasserspeichern 6, 7 oben, in der Mitte und unten Temperatursensoren, so können sehr individuell mehrere Wärmeanforderungen unter Ausnutzung der gespeicherten Wärmemenge bedient werden.

Scheint die Sonne, während weder Brauchwasser-, noch Heizungsanforderung existiert und die Warmwasserspeicher 6, 7 geladen sind, so wird optional Wärme von dem Solarkollektor 1 zu den Wärmesonden 3 zu deren Regenerierung geleitet.

Auch kann aus anderen Gründen - unabhängig vom Brauchwasser- und Heizungsbedarf - Wärme zu den Wärmesonden 3 geleitet werden, beispielsweise um deren Vereisen zu vermeiden.

Die Wärmesonden 3 im Erdreich sind mittels Ventilen einzeln zu- und abschaltbar, so dass die Wärmesonden 3 sich auf unterschiedlichen Temperaturniveaus befinden können.

Steht nicht genügend solarer Ertrag zur Verfügung, so wird Wärme aus den Warmwasserspeicher 6, 7 und den Wärmesonden 3 im Erdreich über die Wärmepumpen 8 zur Deckung des Bedarfs verwendet.

Eine Optimierung der Leistungszahl ist durch gezielte Auswahl der Sonden möglich.

Um ein Vereisen des Solarkollektors 1 ohne den Einsatz von Frostschutzmittel in den Leitungen zu vermeiden, kann - nicht dargestellt - die Leitung des Solarkollektors in einen Drainback-Behälter entleert werden oder Wärme von den Wärmesonden 3 zum Solarkollektor 1 geführt werden; dies führt jedoch zu Wärmeverlusten an die Umgebung.

An Sommertag, an denen alle Verbraucher keinen Bedarf melden, vergleicht der Regler die aufgezeichneten Daten der Wärmesonden 3. Zur Verfügung stehenden Solarenergie versorgt die kälteste Wärmesonde 3. Während dieser Regenerierung werden die Temperaturen von Quellenvor- und Rücklauf gemessen. Ferner wird mittels Volumenstrommessung die eingespeiste Energie gemessen. Nach Regenerierung (Parameter im Regler einstellbar, Standard 30% Energierückspeisung des Energieverbrauches pro Tag) wird optional die nächste Sonde regeneriert. Kommt während der Regeneration eine Bedarfsmeldung eines Verbrauchers, wird dieser Verbraucher mit dem Solarkollektor 1 verbunden. Sinkt während der Versorgung der Solarertrag, wird weitere Energie aus einem der Pufferspeicher 6, 7 genommen. Vorher werden die gespeicherten Energiedaten überprüft, ob diese für die Bedarfsdeckung ausreichend sind, Ist dies nicht der Fall, wird die 1. Wärmepumpe 8 mit der Wärmesonde 3, welche die höchste Temperatur besitzt, in Betrieb genommen, d.h. sie wird langsam angefahren und es wird permanent gemessen, wie hoch die Abweichung von bereitgestellter Energie und benötigter Energie ist.

Dementsprechend wird die Wärmepumpe 8, die Quellen und Heizkreispumpe variabel in der Drehzahl hoch bzw. runter geregelt.

Generell findet eine permanente Überwachung des Bedarfs und des Ertrags statt. Je nach Zustand der Quellen (Solarkollektor 1, Wärmepumpen 8 mit Wärmesonden 3, Warmwasserspeicher 6, 7) wird entschieden, welche Quelle zur Deckung verwendet wird. Die Prüfung finden in der Regel mittels Temperatursensoren und Volumenstrommessung mit den Sollwertvorgaben aufgrund von Heizkurven, Festwertvorgaben und ebenfalls gekoppelt mit einer Volumenstrommessung und realen Verbrauchsdaten statt.

Optional können die Wärmepumpen 8 zu bestimmten Zeit betrieben werden, zu denen entsprechend günstige Stromtarife vorliegen. Hierzu erhält der Regler 4 die notwendigen Daten.

## Patentansprüche

1. Verfahren zur Nutzung von solarer Wärme mit mindestes einem Solarkollektor (1), mindestens einem Warmwasserspeicher (6, 7), mindestens einer Wärmepumpe (8) und mindestens einer Wärmesonde (3), welche mit der mindestens einen Wärmepumpe (8) verbunden ist, sowie mindestens einem Heizungskreislauf (9), **dadurch gekennzeichnet, dass** bei solarem Ertrag mittels des Solarkollektors (1) bedarfsgerecht Wärme auf den mindestens einem Warmwasserspeicher (6, 7), den mindestens einem Heizungskreislauf (9) und / oder in die mindestens eine Wärmesonde (3) geleitet wird.

2. Verfahren zur Nutzung von solarer Wärme nach Anspruch 1, **dadurch gekennzeichnet, dass** der Wärmeertrag des Solarkollektors (1) in folgender Reihenfolge verwendet wird,
- Befriedigung des Wärmebedarfs zur Brauchwasserbereitung,
- Befriedigung des Wärmebedarfs der Heizungskreisläufe (9),
- Ladung der Warmwasserspeicher (6, 7) und
- die Regenerierung der Wärmesonden (3),
wobei diese Wärmesenken alleine oder mindestens zwei gleichzeitig mit Wärme versorgt werden können.

3. Verfahren zur Nutzung von solarer Wärme nach Anspruch 1 oder 2, **dadurch gekennzeichnet, dass** in dem Fall, in dem der solare Ertrag des Solarkollektors (1) nicht zur Deckung der Wärmeanforderung ausreicht, Wärme aus den Warmwasserspeichern (6, 7) oder aus den Wärmesonden (3) entnommen wird.

4. Verfahren zur Nutzung von solarer Wärme nach Anspruch 3, **dadurch gekennzeichnet, dass** mittels mindestens eines, vorzugsweise mehrerer auf unterschiedlichem Höhenniveau angeordneten Temperatursensoren in den Warmwasserspeichern (6, 7) der Ladezustand ermittelt wird und je höher die Speicherladung ist, desto mehr Wärme aus den Warmwasserspeichern (6, 7) zur Befriedigung des Wärmebedarfs entnommen wird.

5. Verfahren zur Nutzung von solarer Wärme nach Anspruch 1, **dadurch gekennzeichnet, dass** die Temperatur der Wärmesonden (3) erfasst wird und in dem Fall, in dem eine Vereisung der Wärmesonden (3) droht, Wärme von dem Solarkollektor oder einem Warmwasserspeicher (6, 7) in die Wärmesonden geleitet wird.

6. Solartechnische Anlage mit mindestes einem Solarkollektor (1), mindestens einem Warmwasserspeicher (6, 7), mindestens einer Wärmepumpe (8) und mindestens einer Wärmesonde (3), welche mit der mindestens einen Wärmepumpe (8) verbunden ist, sowie mindestens einem Heizungskreislauf (9), **dadurch gekennzeichnet, dass** der Solarkollektor (1) über fluidführende Leitungen mit mindestens einer Wärmesonde (3) verbunden ist, wobei in diesen Leitungen Um- und / oder Absperrventile zum Sperren der Verbindung angeordnet sind.
